(19) Europäisches Patentamt

European Patent Office

Office européen des brevets

(11) **EP 1 061 275 B1**

(12) **EUROPÄISCHE PATENTSCHRIFT**

(45) Veröffentlichungstag und Bekanntmachung des Hinweises auf die Patenterteilung:
**28.06.2006 Patentblatt 2006/26**

(51) Int Cl.:
***F16B 19/08*** *(2006.01)*

(21) Anmeldenummer: **00111772.0**

(22) Anmeldetag: **03.06.2000**

(54) **Heftblindniet aus Leichtmetall und Verfahren zum Vernieten und anschliessenden Ausbohren solchen Niets**

Light metal blind rivet and process for riveting and subsequently drilling away such rivet

Rivet aveugle en alliage léger ainsi que procédé pour le riveter et ultérieurement l'éliminer par perçage

(84) Benannte Vertragsstaaten:
**AT BE CH CY DE DK ES FI FR GB GR IE IT LI LU MC NL PT SE**

(30) Priorität: **15.06.1999 DE 19927081**

(43) Veröffentlichungstag der Anmeldung:
**20.12.2000 Patentblatt 2000/51**

(73) Patentinhaber: **Airbus Deutschland GmbH 21129 Hamburg (DE)**

(72) Erfinder:
• **Wendt, Wilfried**
  **21614 Buxtehude (DE)**
• **Barrau, Serge**
  **21635 Jork (DE)**
• **Grandt, Jörg, Dipl.-Ing.**
  **49565 Bramsche (DE)**

(74) Vertreter: **Hansmann, Dierk Patentanwälte Hansmann-Klickow-Hansmann Jessenstrasse 4 22767 Hamburg (DE)**

(56) Entgegenhaltungen:
**WO-A-97/25538          DE-A- 19 652 031**

EP 1 061 275 B1

## Beschreibung

Die Erfindung betrifft ein Heftblindniet aus Leichtmetall, vorzugsweise für den Flugzeugbau, unter Verwendung einer aus einem Schaft und einem Setzkopf bestehenden runden Niethülse, wobei der Schaft der Niethülse Bohrungen von zu heftenden Bauteilen durchdringt, und wobei die Niethülse eine Durchgangsbohrung zur Aufnahme eines einen Nietdornkopf und ein Zugteil aufweisenden Nietdornes besitzt, und wobei eine Ausbohrung des Heftblindnietes sowie eine Aufbohrung der Nietbohrungen für das endgültige Verbindungselement in einem Arbeitsgang mit einem Bohrer erfolgt, dessen Durchmesser größer als der Durchmesser des Setzkopfes der Niethülse ist sowie dem Fertigungsdurchmesser des endgültigen Verbindungselementes entspricht.

In der DE 28 31 012 C2 ist ein Nietkörper für einen Heftniet beschrieben, bestehend aus einem Schaft und einem Kopf, die zur Aufnahme eines Nietdorns gemeinsam durchbohrt sind. Der Kopf weist mindestens zwei radiale Ausnehmungen auf, die vom Kopfrand mindestens bis zum Außendurchmesser des Schaftes reichen, wobei die Ränder der Ausnehmungen im eingebauten Zustand des Niets einen Abstand voneinander aufweisen. Hierbei sind die Ausnehmungen auf dem Kopf so verteilt angeordnet, daß die Kopfsegmente beim Ausbohren des Niets abfallen.

Ein derartiger Nietkörper ergibt zusammen mit einem Nietdorn einen Heftniet. Beim Gebrauch wird der Nietdorn durch den Nietkörper und beide Teile durch die Bohrungen der zu heftenden Teile gesteckt. Das Nieten erfolgt in der Weise, daß der Nietdornkopf in den Schaft des Nietkörpers eingezogen wird, dabei diesen aufweitet und danach der Nietdorn an einer Sollbruchstelle abreißt. Zur Entfernung des Heftnietes wird mit einem Bohrer, der die Dicke des Bohrungsdurchmessers aufweist, der Kopf des Nietkörpers aufgebohrt. Hierbei soll der geschlitzte Setzkopf das Ausbohren erleichtern und verhindern, daß sich die Setzringe auf den Bohrer schieben. Nachteiligerweise ist dieses in der Praxis nicht zu verhindern, da sich die auszubohrenden Niete mitdrehen und sich somit Bauteilbeschädigungen ergeben. Auch können Arbeitsstörungen durch nicht weggesprungene Schließringe auftreten. Von Nachteil ist weiterhin, daß ein zusätzlicher Arbeitsschritt erforderlich ist, um die Bohrung auf den Fertigungsdurchmesser des endgültigen Verbindungsnietes aufzubohren.

Die US-P-5 689 873 sowie die darauf basierende, nachangemeldete WO 97/25538 A1 offenbart einen Heftblindniet, der über einen konischen Setzkopf sowie über einen in einer runden Niethülse aufgenommenen Nietdorn mit einem konisch erweiterten Ende verfügt. Zum Vernieten von zwei plattenförmigen Bauteilen wird der Heftblindniet in eine in den Bauteilen angebrachte Nietbohrung eingesetzt. Dann wird der Nietdorn vollständig durch den Hohlraum der Niethülse hindurch und aus dieser heraus gezogen. Bei diesem Vorgang wird an der dem Setzkopf abgewandten Seite ein radial expandierter Schließkopf gebildet, und die Niethülse wird über ihre gesamte axiale Länge radial aufgeweitet, so dass sie sich in radialer Richtung fest an die Innenumfangsfläche der Nietbohrung anlegt. Zum Entfernen des Heftblindniets wird dieser von der Seite des Setzkopfes her mit einem Bohrer aufgebohrt. Der Durchmesser des Bohrers ist größer als der Durchmesser des konischen Setzkopfes und entspricht dem Durchmesser eines endgültigen Verbindungselementes, welches den Heftblindniet ersetzen soll. Zudem besitzt die Spitze des Bohrers einen Spitzenwinkel, der von dem Konuswinkel des konischen Setzkopfes unterschiedlich ist. Der Bohrer bohrt durch den konischen Setzkopf, die Niethülse und die beiden Bauteile hindurch und schafft so ein Bohrloch, in welches das endgültige Verbindungselement eingesetzt werden kann.

Die DE 196 52 031 A1 offenbart einen als Hammerschlagniet ausgebildeten Blindniet mit einer runden Niethülse mit einem Schaft und einem Setzkopf sowie einer Durchgangsbohrung, in der ein Nietdorn aufgenommen ist, der ein Zugteil, einen Nietdornkopf und eine in der Nähe des Setzkopfes angeordnete Sollbruchstelle aufweist Der Nietdornkopf ist spitz geformt, so dass der Bündniet bei hinreichender axialer Kraftbeaufschlagung ein oder zwei zusammen zu nietende dünnwandige Bauteile durchdringen kann, ohne dass zuvor in einem separaten Arbeitsgang ein Durchgangsloch bzw. eine Nietbohrung für den Blindniet angefertigt werden muss.

Der Erfindung liegt die Aufgabe zugrunde, einen Heftblindniet desjenigen Typs, der einen Nietdom mit einer Sollbruchstelle aufweist, zu schaffen, der ohne eine Beschädigung der mit diesem Heftblindniet temporär vernieteten Bauteile wieder leicht durch Ausbohren entfernt und nach dem Ausbohren durch ein anderes, endgültiges Verbindungselement ersetzt werden kann, ohne dass hierzu ein zusätzlicher Bohrvorgang erfolgen muss. Ferner soll hierfür ein geeignetes Verfahren bereit gestellt werden.

Diese Aufgabe wird gelöst durch einen erfindungsgemäßen Heftblindniet mit den Merkmalen des Anspruchs 1 und ein erfindungsgemäßes Verfahren mit den Merkmalen des Anspruchs 5.

Bevorzugte Ausgestaltungsformen des erfindungsgemäßen Heftblindniets und des erfindungsgemäßes Verfahrens sind Gegenstand der zugehörigen abhängigen Ansprüche.

Ein wesentlicher Vorteil der Erfindung ist in dem Wegfall eines von zwei Arbeitschritten zu sehen. Die Arbeitszeit für den separaten Schritt "Heftblindniet ausbohren" entfällt, da der Heftblindniet in einem Arbeitsgang mit einer Bohrsenkeinheit ausgebohrt und gleichzeitig die Bohrung auf den Fertigungsdurchmesser des endgültigen Verbindungsnietes aufgebohrt wird. Vorteilhafterweise kann ein Stufenbohrer oder ein Bohrsenker verwendet werden.

In der Zeichnung ist ein Ausführungsbeispiel nach der Erfindung dargestellt. Es zeigt:

Fig. 1    ein Heftblindniet mit offener Niethülse in Vorder- und Seitenansicht, sowie

Fig. 2    ein Heftblindniet mit geschlossener Niethülse in Vorder- und Seitenansicht.

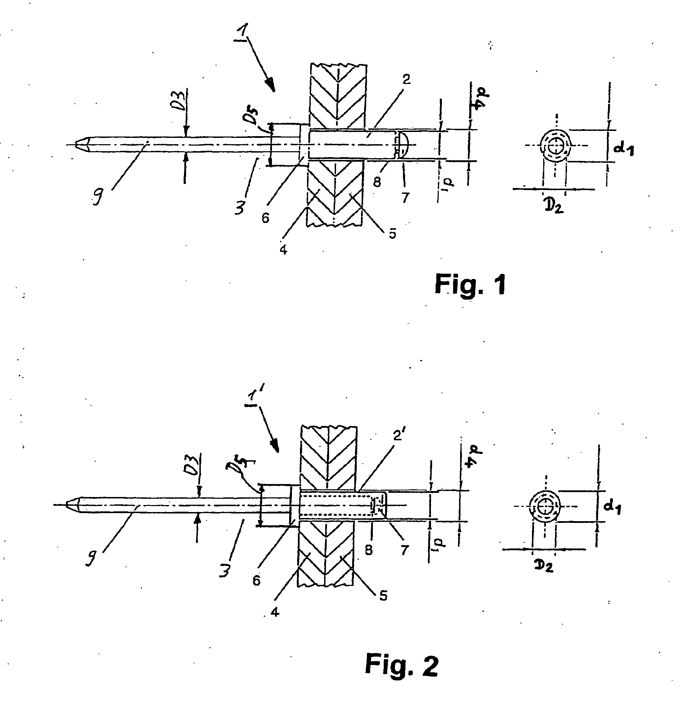

Ein erfindungsgemäßer Heftblindniet aus Leichtmetall 1 bzw. 1' gemäß Fig. 1 bzw. Fig. 2 zum Heften von Bauteilen im Flugzeugbau besteht aus einer runden Niethülse 2 bzw. 2' mit einem Außendurchmesser $d_1$ und einem Nietdorn 3 mit einem Durchmesser $D_3$. Die offene Niethülse 2 und die geschlossene Niethülse 2' weisen jeweils einen Schaft, der die Bohrungen von zu heftenden Bauteilen 4 und 5 durchdringt, und einen Setzkopf 6 auf, der an der Stirnseite eines der beiden Bauteile 4,5 anliegt. Der Durchmesser der Bohrungen der Bauteile 4 und 5 ist mit $d_4$ bezeichnet, während der Durchmesser des Setzkopf 6 des Blindnietes 1 bzw. 1' mit $D_5$ benannt ist. Weiterhin besitzen die Niethülsen 2 und 2' jeweils eine Durchgangsbohrung zur Aufnahme der Nietdorne 3, die einen Nietdornkopf 7 mit einem Außendurchmesser $D_2$ und ein Zugteil 9 aufweisen. Zwischen Nietdornkopf 7 und Zugteil 9 befindet sich eine Sollbruchstelle 8, vorzugsweise in unmittelbarer Nähe der Nietdornköpfe 7.

Der Durchmesser $D_5$ des Setzkopfes 6 der Niethülse 2 bzw. 2' ist für metrische Abmessungen nach der Formel

$$D_5 \; [mm] \; = \; d_1 \; [mm] \; + \; 0,8 \; [mm] \; \pm \; 0,1$$

für zöllige Abmessungen nach der Formel

$$D_5 \; [mm] \; = \; d_1 \; [mm] \; + \; 0,7 \; [mm] \; \pm \; 0,1$$

hergestellt, wobei durch $d_1$ der Außendurchmesser der Niethülse 2 bzw. 2' und durch $\pm$ 0,1 die Toleranzgrenzen angegeben werden. Als ein Beispiel für metrische Abmessungen ergibt sich bei einem Außendurchmesser der Niethülse 2 bzw. 2' von 3,2 mm der Durchmesser $D_5$ des Setzkopfes 6 der Niethülse 2 bzw. 2' zu 4,0 mm +/- 0,1 mm. Hingegen ergibt sich für zöllige Abmesseungen bei einem Außendurchmesser der Niethülse 2 bzw. 2' von beispielsweise 4,8 mm der Durchmesser $D_5$ des Setzkopfes 6 der Niethülse 2 bzw. 2' zu 5,5 mm +/- 0,1 mm.

Während eines Abzugvorganges werden die Bauteile 4 und 5 mit Hilfe des Nietdornes 3 zusammengezogen. Es bildet sich ein Schließkopf an der Niethülse 2 bzw. 2'. Beim Erreichen der Abrißkraft der Sollbruchstelle 8 des Nietdornes 3 fällt entweder der Nietdornkopf 7 bei der offenen Niethülse 2 gemäß Fig. 1 heraus oder er verbleibt bei der Verwendung einer geschlossenen Niethülse 2' gemäß Fig. 2 (Becherniet) in dem unteren Ende der Niethülse 2'.

Nachdem die Bauteile 4 und 5 gefügt sind, kann in einem Arbeitsgang eine Ausbohrung eines gesetzten Heftblindniets 1 bzw. 1' sowie eine Aufbohrung und Senkung der Nietbohrungen erfolgen. Zur Zentrierung während des Bohr- und Senkvorganges wird mit einem Stufenbohrer/Bohrsenker mit einem Durchmesser der Fertigbohrung gearbeitet, wobei die Stufe des Bohrers vorzugsweise auf den Innendurchmesser der Niethülsen 2 bzw. 2' abgestimmt ist. Während des Bohrvorganges wird der Setzkopf 6 des Heftblindnietes 1 bzw. 1' überwiegend zerspant. Hierdurch entfallen Beschädigungen an der Oberfläche der Bauteile 4 durch Materialreste der Setzköpfe 6. Im weiteren Verlauf des Bohrprozesses wird die Niethülse zerspant, oder sie entfällt zusammen mit dem Schließkopf. Gleichzeitig entstehen Bohrung und Senkung für das endgültige Verbindungselement. Somit wird eine Ausbohrung des Heftblindnietes 1, 1' in einem Arbeitsgang mit dem Aufbohren und dem Senkvorgang der Nietbohrungen mit einem Bohrer ermöglicht, dessen Durchmesser dem Fertigungsdurchmesser des endgültigen Verbindungsnietes entspricht.

Bezugszeichenliste

| | |
|---|---|
| 1 | Heftblindniet (mit offenem Schaft) |
| 1' | Heftblindniet |
| 2 | Niethülse (offen) |
| 2' | Niethülse (geschlossen) |
| 3 | Nietdorn |
| 4 | Bauteil I |
| 5 | Bauteil II |
| 6 | Setzkopf des Blindniets |
| 7 | Nietdornkopf |
| 8 | Sollbruchstelle |

9    Zugteil des Nietdornes 3 (zum Eingriff des Klemmbackenmechanismus)

$d_1$    Außendurchmesser der Niethülse 2 bzw. 2'
$D_2$    Außendurchmesser des Nietdornkopfes7
$D_3$    Durchmesser des Nietdorns 3
$d_4$    Durchmesser der Bohrungen der Bauteile 4 und 5
$D_5$    Durchmesser des Setzkopfes 6 der Niethülse 2 bzw. 2'

**Patentansprüche**

**1.**    Heftblindniet (1, 1') aus Leichtmetall, vorzugsweise für den Flugzeugbau, bestehend aus einer runden Niethülse (2, 2') mit einem Schaft und einem Setzkopf (6) sowie einer Durchgangsbohrung, in der ein Nietdom (3) aufgenommen ist, der ein Zugteil (9), einen Nietdornkopf (7) und eine Sollbruchstelle (8) aufweist,
**dadurch gekennzeichnet, dass**
der Durchmesser ($D_5$) des Setzkopfes (6)

   - für metrische Abmessungen des Heftblindniets (1, 1') nach der Formel

$$D_5 \ [mm] = d_1 \ [mm] + 0{,}8 \ [mm] \pm^{0{,}1}$$

   - für zöllige Abmessungen des Heftblindniets (1, 1') nach der Formel

$$D_5 \ [mm] = d_1 \ [mm] + 0{,}7 \ [mm] \pm^{0{,}1}$$

hergestellt ist, wobei $d_1$ den Außendurchmesser der Niethülse (2, 2') und $\pm^{0,1}$ die Toleranzgrenze angibt.

**2.**    Heftblindniet (1) nach Anspruch 1
**dadurch gekennzeichnet, dass**
dieser eine offene Niethülse (2) besitzt.

**3.**    Heftblindniet (1') nach Anspruch 1,
**dadurch gekennzeichnet, dass**
dieser als ein Bechemiet (1') mit geschlossener Niethülse (2') ausgestaltet ist.

**4.**    Heftblindniet (1, 1') nach Anspruch 1,
**dadurch gekennzeichnet, dass**
die Sollbruchstelle (8) in unmittelbarer Nähe des Nietdornkopfs (7) liegt.

**5.**    Verfahren zum Vernieten und anschließenden Ausbohren eines Heftblindniets (1, 1') nach einem der Ansprüche 1 bis 4 zur Schaffung einer Nietbohrung für ein endgültiges Verbindungselement, umfassend folgende Schritte:

   - Herstellen von Bohrungen in Bauteilen (4, 5), die mittels des Heftblindniets (1, 1') zu heften sind;
   - Einfügen des Heftblindniets (1, 1') in die Bohrungen, so dass der Schaft der Niethülse (2, 2') die Bohrungen der zu heftenden Bauteilen (4, 5) durchdringt;
   - Vernieten des Heftblindniets (1, 1'), wobei sich ein Schließkopf an der Niethülse (2, 2') bildet und die Bauteile (4, 5) mit Hilfe des Nietdorns (3) zusammengezogen werden, wobei sich der Setzkopf (6) und der gebildete Schließkopf an Stirnseiten der Bauteile (4, 5) anlegen, und der Nietdom (3) bei Erreichen einer Abrisskraft an der Sollbruchstelle (8) abreißt; und
   - in einem Arbeitsgang Aufbohren des vernieteten Heftblindnietes (1, 1'), wobei der Setzkopf (6) weitgehend zerspant wird, und Aufbohren und Senken einer Nietbohrungen für das endgültige Verbindungselement mittels eines Bohrers, dessen Durchmesser größer als der Durchmesser des Setzkopfes (6) der Niethülse (2, 2') ist sowie dem Fertigungsdurchmesser des endgültigen Verbindungselementes entspricht.

**6.** Verfahren nach Anspruch 5,
**dadurch gekennzeichnet, dass**
der zum Aufbohren und Senken verwendete Bohrer ein zentrierender Bohrsenker ist, oder ein zentrierender Stufenbohrer, dessen Stufe auf den Innendurchmesser der Niethülse (2, 2') abgestimmt ist.

**Claims**

**1.** Blind fastening rivet (1, 1') made from light alloy, preferably for use in aircraft construction, comprising a tubular rivet sleeve (2, 2') with a shank and a setting head (6) as well as an end-to-end bore accommodating a rivet pin (3) which has a pulling part (9) and a rivet pin head (7) as well as a breaking point (8),
**characterised in that**
the diameter ($D_5$) of the setting head (6) is

- based on the formula

$$D_5 \ [mm] \ = \ d_1 \ [mm] \ + \ 0.8 \ [mm] \ \underline{+}^{0.1}$$

if the blind fastening rivet (1, 1') is manufactured for metric specifications
- based on the formula

$$D_5 \ [mm] \ = \ d_1 \ [mm] \ + \ 0.7 \ [mm] \ \underline{+}^{0.1}$$

if the blind fastening rivet is manufactured for imperial specifications,

where $d^1$ represents the external diameter of the rivet sleeve (2, 2') and $\pm^{0.1}$ represents the tolerance limit.

**2.** Blind fastening rivet (1) as claimed in claim 1,
**characterised in that**
it has an open rivet sleeve (2).

**3.** Blind fastening rivet (1') as claimed in claim 1,
**characterised in that**
it is designed as a closed rivet (1') with a closed rivet sleeve (2').

**4.** Blind fastening rivet (1, 1') as claimed in claim 1,
**characterised in that**
the breaking point (8) lies in the immediate vicinity of the rivet pin head (7).

**5.** Method of rivetting and then boring out a blind fastening rivet (1, 1') as claimed in one of claims 1 to 4 for producing a rivet bore for a final connecting element, comprising the following steps:

- producing bores in components (4, 5) which are to be fastened by means of the blind fastening rivet (1, 1');
- inserting the blind fastening rivet (1, 1') in the bores so that the shank of the rivet sleeve (2, 2') extends through the bores of the components (4, 5) to be fastened;
- rivetting the blind fastening rivet (1, 1') whereby a closing head is formed on the rivet sleeve (2, 2') and the components (4, 5) are pulled together with the aid of the rivet pin (3), and the setting head (6) and the resultant closing head lie against front faces of the components (4, 5), and the rivet pin (3) is torn off when a tearing force is reached at the breaking point (8); and
- the riveted blind fastening rivet (1, 1') is bored on in one operation during which the setting head (6) is largely cut off and a rivet bore for the final connecting element is bored and countersunk by means of a drill, the diameter of which is bigger than the diameter of the setting head (6) of the rivet sleeve (2, 2'), and corresponds to the specified diameter of the final connecting element.

**6.** Method as claimed in claim 5,
**characterised in that**
the drill used for boring and countersinking is a centring bore cutter or a centring stepped drill, the step of which is adapted to the internal diameter of the rivet sleeve (2, 2').

## Revendications

**1.** Rivet aveugle provisoire (1, 1') en alliage léger, de préférence pour la construction aéronautique, constitué d'une douille de rivet ronde (2, 2') avec une tige et une tête de scellement (6) ainsi qu'avec un trou traversant dans lequel est reçu un mandrin de rivet (3) qui comporte une partie de traction (9), une tête de mandrin de rivet (7) et un emplacement de rupture imposée (8), **caractérisé en ce que** le diamètre ($D_5$) de la tête de scellement (6) est calculé,

- pour un rivet aveugle provisoire (1, 1') à dimensions métriques, selon la formule

$$D_5 \ [\text{mm}] \ = \ d_1 \ [\text{mm}] \ + \ 0,8 \ [\text{mm}] \ \pm^{0,1}$$

- pour un rivet aveugle provisoire (1, 1') à dimensions impériales, selon la formule

$$D_5 \ [\text{mm}] \ = \ d_1 \ [\text{mm}] \ + \ 0,7 \ [\text{mm}] \ \pm^{0,1}$$

$d_1$ correspondant au diamètre extérieur de la douille de rivet (2, 2') et $\pm^{0,1}$ à la limite de tolérance.

**2.** Rivet aveugle provisoire (1) selon la revendication. 1, **caractérisé en ce qu'**il possède une douille de rivet ouverte (2).

**3.** Rivet aveugle provisoire (1') selon la revendication 1, **caractérisé en ce qu'**il est conformé en rivet à bout fermé (1') avec douille de rivet (2') fermée.

**4.** Rivet aveugle provisoire (1, 1') selon la revendication 1, **caractérisé en ce que** l'emplacement de rupture imposée (8) se trouve à proximité immédiate de la tête de mandrin de rivet (7).

**5.** Procédé de pose et d'élimination ultérieure par forage d'un rivet aveugle provisoire (1, 1') selon une des revendications 1 à 4 afin de réaliser un trou de rivet pour un élément de liaison définitif, comprenant les étapes suivantes :

- réalisation de trous dans des éléments structurels (4, 5) à assembler provisoirement au moyen d'un rivet aveugle provisoire (1, 1') ;
- insertion du rivet aveugle provisoire (1, 1') dans les trous, de façon que la tige de la douille de rivet (2, 2') traverse les éléments structurels (4, 5) à assembler provisoirement ;
- pose du rivet aveugle provisoire (1, 1'), une tête d'arrêt se formant sur la douille de rivet (2, 2'), et les éléments structurels (4, 5) étant pressés l'un contre l'autre à l'aide du mandrin de rivet (3), la tête de scellement (6) et la tête d'arrêt formée étant appliquées contre des faces frontales des éléments structurels (4, 5), le mandrin de rivet (3) se rompant au niveau de l'emplacement de rupture imposée (8) à l'atteinte d'une force d'arrachement ; et,
- en une seule opération, forage du rivet aveugle provisoire posé (1, 1'), la tête de scellement (6) étant en grande partie réduite en copeaux, et perçage et fraisage d'un trou de rivet pour l'élément de liaison définitif au moyen d'un foret dont le diamètre est supérieur au diamètre de la tête de scellement (6) de la douille de rivet (2, 2') et correspond au diamètre de fabrication de l'élément de liaison définitif.

**6.** Procédé selon la revendication 5, **caractérisé en ce que** le foret employé pour le forage et le fraisage est un foret à fraiser ou un foret étagé dont l'étage est adapté au diamètre intérieur de la douille de rivet (2, 2').

**Fig. 1**

**Fig. 2**